# DEMANDE DE BREVET EUROPEEN

(11) **EP 2 079 214 A1**
(43) Date de publication de la demande: **15.07.2009**
(21) Numéro de dépôt: 09290020.8
(22) Date de dépôt: 09.01.2009
(51) Int. Cl.: H04L 29/06

(54) **Procédé et système de communication et terminal et serveur de confiance**

(30) Priorité: 11.01.2008 FR 0800168
(71) Demandeur: Societé Française du Radiotéléphone, 75008 Paris (FR)
(72) Inventeur: Bouvier, Christian, 78120 Rambouillet (FR); Eznack Maryline, 78260 Acheres (FR); Teimoorzadeh, Kourosh, 28130 Bouglainval (FR)
(74) Mandataire: Debay, Yves

(57) **Abrégé**

L'invention concerne un procédé de communication à plusieurs niveaux de sécurité pour des échanges et des transferts entre deux terminaux communicant par un ou plusieurs réseaux, permettant d'anticiper les risques de corruption ou de fraudes, par une approche coopérative entre différents agents du ou des réseaux interconnectés notamment par
- une étape de référence à une station (ST_Ref), comprenant une interprétation de l'indice de confiance, selon le type de l'indice de confiance,
- une étape d'évaluation de l'indice de confiance fourni par le terminal (TCL) client, selon un critère de confiance,
- une étape de traitement de la requête, en cas d'indice évalué conforme, ou respectivement non conforme, au critère de confiance, selon un premier niveau de sécurité ou respectivement un second niveau de sécurité renforcé par rapport au premier.

## Description

Le domaine de la présente invention est celui des télécommunications. Plus particulièrement, il s'agit d'un procédé mis en oeuvre entre deux terminaux, comme par exemple, un terminal client et un terminal serveur, permettant d'anticiper un risque de fraude ou de corruption lors d'un échange ou d'un transfert entre ces deux terminaux.

La convergence des technologies de télécommunication permet des offres de services de plus en plus variés et complets, mais complique les vérifications associées à la fourniture de services par le fournisseur des services. Un problème est en effet qu'une chaîne d'identification comprend généralement des failles exploitables par des pirates informatiques, une identification de bout en bout ne pouvant pas être garantie. Ainsi des pirates informatiques, en captant quelques informations, peuvent voler des identités, pour effectuer des opérations à la place d'un utilisateur afin de contracter un crédit ou dérober des informations personnelles de l'utilisateur. Un fournisseur de services essaiera ainsi de se prémunir contre des fraudes lors des accès à ses services.

Une amélioration de la sécurité, lors des échanges, par un processus d'identification ou d'authentification, pourrait être mise en place, par exemple, par un organisme central qui concentrerait une multitude d'informations propres à ses abonnés afin de les identifier de façon plus sûre. Cependant cette approche centralisée pose d'une part un problème concernant le droit au respect de l'identité humaine. L'organisme centralisateur, comme par exemple une institution gouvernementale, aurait en effet accès aux informations personnelles de toute une communauté. De plus ce type de mise en oeuvre implique des structures de communication ayant des capacités de traitement et de débit importantes, afin de pouvoir échanger de multiples informations pour l'authentification des utilisateurs, en plus des données relatives aux différents services proposés. D'autre part ce type de solution centralisée ne résout pas notamment le problème de définition de périmètres de sécurité.

Un autre inconvénient d'une solution centralisée est qu'une fois les informations relatives à un utilisateur révélées, un pirate peut les utiliser d'autant plus dangereusement que ces informations sont considérées comme sûres et non remises en doute. De plus si la base de données comprenant les informations confidentielles, est corrompue, c'est-à-dire si les informations de vérifications ont été falsifiées par des manoeuvres frauduleuses, l'ensemble du système central d'identification ou d'authentification n'est plus sûr et devient inopérant.

La demande internationale WO 99/65207 décrit un système de gestion de confiance orientée « réseau » et concerne une évaluation de confiance basée sur l'origine (localité ou connaissance) des adresses IP des utilisateurs requérants l'accès aux ressources dudit réseau. Cette méthode d'évaluation par la source est l'une des vulnérabilités majeures par usurpation d'identités et compte parmi les premières vulnérabilités identifiées depuis des années.

La présente invention a pour objet de remédier aux inconvénients de l'art antérieur en proposant la mise en place d'une chaîne de confiance par un procédé de communication à plusieurs niveaux de sécurité pour des échanges et des transferts entre un terminal client et un serveur communicant par un ou plusieurs réseaux, permettant d'anticiper les risques de corruption ou de fraudes, par une approche coopérative entre différents agents du ou des réseaux interconnectés.

Cet objectif est atteint grâce à un procédé de communication entre un terminal client et un serveur, le terminal client et le serveur étant reliés à un réseau de télécommunications quelconque (fixe, mobile ou satellite), le terminal client comprenant un composant de traitement, un composant de mémorisation et un module d'interface de communication,

le procédé comprenant au moins une étape d'envoi, par le terminal client, d'une requête au serveur, caractérisé en ce que le terminal client mémorisant une structure de confiance comprenant un identifiant de confiance du terminal client et au moins un identifiant d'une station (comme par exemple un point de collecte ou d'accès de trafic ou un relais ou un point d'accès au service) de confiance appartenant au réseau et ayant déjà été en liaison avec le terminal client, l'identifiant de confiance propre au terminal client étant associé à au moins un indice relatif à ladite station de confiance.

La requête générée par le terminal, à l'aide de la structure de confiance, comprend au moins l'identifiant de confiance du terminal client, l'identifiant de la station de confiance et l'indice de confiance associé,
le procédé comprenant au moins :
- une étape de réception de la requête par le serveur,
- une étape de référence à la station ou au relais de confiance, par son identifiant, comprenant une interprétation de l'indice de confiance (éventuellement une pondération), selon le type de l'indice de confiance,
- une étape d'évaluation de l'indice de confiance fourni par le terminal client, selon un critère de confiance,
- une étape de traitement de la requête, en cas d'indice de confiance évalué conforme au critère de confiance, selon un premier niveau de sécurité ou
- une étape de traitement de la requête, en cas d'indice de confiance évalué non conforme au critère de confiance, selon un second niveau de sécurité renforcé par rapport au premier niveau de sécurité.

Selon une autre particularité, l'étape d'envoi de la requête est précédée de :
- une étape d'activation de la structure de confiance (selon l'implémentation de la couche protocolaire de confiance mise en oeuvre),
- une étape de génération de la requête comprenant un message interprétable par le serveur auquel est ajouté l'identifiant de confiance du terminal client, l'identifiant de la station de confiance et l'indice de confiance associé,
- une ou plusieurs étapes de routage suivant l'étape d'envoi et précédant l'étape de réception par le serveur, un parcours de la requête, comprenant des références de routeurs et de noeuds intermédiaires, étant associé à la requête transmise au serveur.

Selon une autre particularité, chaque routeur ou noeud intermédiaire réalise, à la réception de la requête, une étape d'ajout à la requête d'un indice de confiance associé à une référence de station de confiance correspondant au routeur ou noeud intermédiaire recevant la requête, l'indice de confiance associé correspondant au parcours de la requête, depuis le terminal client, via des noeuds ou des routeurs intermédiaires, jusqu'au routeur final recevant la requête.

Ainsi la chaîne de confiance se matérialise grâce aux interactions protocolaires entre les différents équipements (routeur, client, serveur, firewall, ...etc.) du ou des réseau(x) participant(s) à la gestion contextuelle des indices de confiance.

Le routeur ou noeud intermédiaire réalise ensuite une étape de transmission de la requête, vers le serveur, par un chemin de routage.

Selon une autre particularité, durant l'étape de référence à la station de confiance, l'interprétation de l'indice de confiance, de type parcours de la requête, comprend une extraction des types de routeurs et de leur type de réseau associé ou des types de réseaux associés pour un noeud de type passerelle,
l'étape d'évaluation de l'indice de confiance, correspondant au parcours de la requête, comprenant une comparaison de chaque type de réseau d'un ensemble de réseaux parcourus par la requête avec une liste de types de réseaux de confiance, le parcours étant conforme au critère de confiance si chacun des types de réseaux parcourus appartient à la liste des types de réseaux de confiance.

Selon une autre particularité, l'étape de référence à la station de confiance comprend :
- une étape d'envoi, à la station de confiance, d'une requête de confirmation de confiance, comprenant au moins l'identifiant de confiance du terminal client,
- une étape de réception de données de confiance, fournies par la station de confiance, relatives à l'identifiant de confiance du terminal client.

Selon une autre particularité, les données de confiances reçues sont représentatives d'un indice de confiance mis à jour et provenant d'une base de données de la station de confiance comprenant l'identifiant de confiance du terminal client associé à cet indice de confiance mis à jour,
l'indice de confiance fourni par la station de confiance étant comparé à l'indice de confiance fourni par le terminal client et associé à l'identifiant de cette station, durant l'étape d'évaluation,
l'indice de confiance fourni par le client étant conforme au critère de confiance lorsque l'indice de confiance fourni par le client est supérieur ou égal à l'indice de confiance fourni par la station de confiance référencée,
l'indice de confiance fourni par le client n'étant pas conforme au critère de confiance lorsque l'indice de confiance fourni par le client est inférieur à l'indice de confiance fourni par la station de confiance référencée.

Selon une autre particularité, l'indice de confiance, mémorisé par la station de confiance référencé, est réglé de façon croissante suivant un nombre d'opérations précédemment réussies, par rapport à un nombre total d'opérations, entre la station de confiance référencée et le terminal client, ces opérations étant du type :
- opération d'authentification mutuelle, ou
- opération d'authentification du terminal client par identifiant de connexion et mot de passe, ou
- opération de paiement par le terminal client,
- opération de service réussie entre un client et un serveur,
- opération de réponse, par le client, aux demandes d'accusé réception envoyées par la station de confiance référencée,
- opération de justification d'identité de l'utilisateur du terminal client.

Selon une autre particularité, la requête générée par le terminal, à l'aide de la structure de confiance, peut être protégée par une clé et associée à une signature d'indice, les données de confiance reçues fournies par la station de confiance comprenant une clé et une signature d'indice, l'étape d'évaluation de l'indice de confiance comprenant
- une étape de détermination, à l'aide de la clé fournie par la station de confiance, de la signature de l'indice de confiance fourni par le terminal client,
- une comparaison entre la signature fournie par la station de confiance référencée et la signature déterminée de l'indice de confiance fourni par la station de confiance référencée,
l'indice de confiance fourni par le client étant conforme au critère de confiance lorsque la signature déterminée correspond à la signature fournie par la station de confiance référencée,
l'indice de confiance fourni par le client n'étant pas conforme au critère de confiance lorsque la signature déterminée ne correspond pas à la signature fournie par la station de confiance référencée.

Selon une autre particularité, après le traitement de la requête, réalisée avec succès par le serveur, le procédé comprend une étape de mémorisation dans une base de données du serveur, de données représentatives de l'identifiant de confiance du terminal client, associé à un premier indice de confiance archivé déterminé selon le niveau de sécurité du traitement réalisé.

Selon une autre particularité, après le traitement de la requête, réalisée avec succès par le serveur, le procédé comprend une étape d'envoi, par le serveur, au terminal client, de données de fin de traitement représentatives d'un identifiant du serveur associé à un second indice de confiance archivé déterminé selon le niveau de sécurité du traitement réalisé avec succès.

Selon une autre particularité, le procédé est suivi de :
- une étape de réception, par le terminal client, des données de fin de traitement,
- une étape d'extraction et de mémorisation de données représentatives de la requête ou de son traitement, associées à l'identifiant du serveur et au second indice de confiance représentatif du niveau de sécurité du traitement réalisé avec succès.

Selon une autre particularité, après un échec du traitement, selon son niveau de sécurité, le procédé comprend une étape de mémorisation dans une base de données du serveur, de données représentatives de l'identifiant de confiance du terminal client associées à des données représentatives d'un troisième indice de confiance archivé déterminé selon le niveau de sécurité du traitement ayant échoué.

Selon une autre particularité, la requête du terminal comprenant une pluralité d'indices de confiance et d'identifiants de station de confiance associés, le procédé comprend une pluralité d'étapes de référence à chaque station de confiance et une pluralité d'étapes d'évaluation de chaque indice de confiance, suivies d'une étape de moyennage ou de corrélation par un ensemble de valeurs pondérées pour déterminer une conformité de la pluralité d'indices de confiance, graduellement par rapport au critère de conformité, la procédure de sécurité ayant une pluralité de niveaux de sécurité positionnés graduellement entre un niveau de sécurité maximum et un niveau de sécurité minimum.

Un autre objet de la présente invention est de proposer la mise en place d'une chaîne de confiance par un terminal client pour des échanges et des transferts entre le terminal client et un serveur communicant par un ou plusieurs réseaux, permettant d'anticiper les risques de corruption ou de fraudes, par une approche coopérative entre différents agents du ou des réseaux interconnectés.

Cet objectif est atteint grâce à un terminal client de communication comprenant un composant de traitement, un composant de mémorisation, un module d'interface de communication avec un réseau de communication et un module de génération d'une requête vers un serveur, caractérisé en ce qu'il mémorise une structure de confiance comprenant un identifiant de confiance du terminal client et au moins un identifiant d'une station de confiance reliée au réseau de communication et ayant déjà été en liaison avec le terminal client, chaque identifiant de station de confiance étant associé à un indice de confiance propre au terminal client, le terminal client comprenant au moins un module d'association de la requête à des données de confiance comprenant l'identifiant de confiance du terminal client, l'identifiant de la station de confiance et l'indice de confiance associé.

Selon une autre particularité, la structure de confiance comprend de plus, associées à chaque indice de confiance :
- une valeur décimale représentative d'une confiance accordée par la station de confiance au terminal client,
- une valeur temporelle représentative d'une date de création de l'indice de confiance,
- une durée de vie de l'indice de confiance.

Selon une autre particularité, la structure de confiance comprend de plus un identifiant d'un serveur d'une base de données comme dépositaire d'indices de confiance.

Selon une autre particularité, le terminal client comprend un programme interactif d'activation, par l'utilisateur, du module d'association de la requête à des données de confiance, correspondant à l'activation d'un protocole de confiance s'appuyant sur un protocole au niveau applicatif.

Selon une autre particularité le terminal client comprend un module de capitalisation de confiance réalisant une extraction et une mémorisation, dans la structure de confiance, de données représentatives d'un traitement, par le serveur, de la requête envoyée, fournies par le serveur, ces données représentatives du traitement comprenant un identifiant du serveur et un second indice de confiance représentatif d'un niveau de sécurité du traitement réalisé avec succès.

Un autre objet de la présente invention est de proposer la mise en place d'une chaîne de confiance coopérative, en partageant et enrichissant les informations liées aux indices de confiance, par une plateforme de serveur permettant d'anticiper les risques de corruption ou de fraudes, par une approche coopérative entre différents agents du ou des réseaux interconnectés.

Cet objectif est atteint grâce à une plateforme de serveur pour au moins un terminal client accédant à un programme serveur, la plateforme de serveur étant reliée à un ou plusieurs réseaux de communication, caractérisé en ce qu'elle comprend :
- un module de réception de la requête réalisant une extraction d'un identifiant d'une station de confiance, fourni par le terminal client,
- un module de référence à la station de confiance, par son identifiant, et d'interprétation de l'indice de confiance, selon le type de l'indice de confiance,
- un module d'évaluation de l'indice de confiance, en fonction de l'interprétation, selon un critère de confiance,
- un module de traitement de la requête, selon au moins un premier ou respectivement un second niveau de sécurité distincts, en cas d'indice de confiance évalué conforme, ou respectivement non conforme, au critère de sécurité.

Selon une autre particularité, la plateforme de serveur comprend une base de données d'archivage d'identifiants de confiance de terminaux associés chacun à un indice de confiance correspondant au succès ou à l'échec d'une vérification selon un niveau de sécurité déterminé, en relation avec le terminal dont l'identifiant est archivé, la base de données étant consultable par d'autres terminaux ou d'autres programmes serveurs.

Selon une autre particularité, le module de réception de la requête réalisant une extraction de l'identifiant de la station de confiance, le module de référence à la station de confiance, le module d'évaluation de l'indice de confiance et le module de traitement de la requête, selon au moins le premier ou le second niveau de sécurité distincts, forment un ensemble de gestion d'un protocole de confiance s'appuyant sur un protocole au niveau applicatif.

Un autre objet de la présente invention est de proposer la mise en place d'une chaîne de confiance par un système de communication pour des échanges et des transferts entre le terminal et un serveur communiquant par un ou plusieurs réseaux, permettant d'anticiper les risques de corruption ou de fraudes, par une approche coopérative entre différents agents du ou des réseaux interconnectés.

Cet objectif est atteint grâce à un système de communication comprenant au moins une plateforme de serveur selon l'invention et un terminal client selon l'invention, caractérisé en ce que l'activation du protocole de confiance par l'utilisateur du terminal entraîne automatiquement l'activation de la gestion du protocole de confiance dans la plateforme de serveur, à la réception de la requête conforme au protocole de confiance.

Selon une autre particularité, le système de communication comprend un serveur d'identifiants de confiance fournissant leur identifiant de confiance au serveur ou au terminal client.

Selon une autre particularité, le système de communication comprend des noeuds de communication intermédiaires de transmission de messages entre le terminal client et la plateforme de serveur, ces noeuds pondérant ou majorant les indices de confiance des messages transmis.

Selon une autre particularité, après l'activation du protocole de confiance par le terminal client, un serveur central de gestion de confiance réalise un archivage dans une base de données, d'un nouvel indice de confiance attribué par la plateforme de serveur, ou respectivement par le terminal client, au terminal client, ou respectivement à la plateforme de serveur.

Selon une autre particularité, l'indice de confiance mémorisé dans la base de données du serveur central est associé à :
- un identifiant du terminal client, ou respectivement de la plateforme de serveur, comme détenteur de l'indice de confiance,
- un identifiant de la plateforme serveur, ou respectivement du terminal client, comme producteur d'indice,
- une valeur décimale représentative d'une confiance accordée par le producteur au détenteur,
- une valeur temporelle représentative d'une date de création de l'indice,
- une durée de vie de l'indice.

L'invention, ses caractéristiques et ses avantages apparaîtront plus clairement à la lecture de la description faite en référence aux figures ci-dessous référencées et données à titre d'exemples non limitatifs :
- la figure 1 représente un exemple de schéma illustrant des échanges lors de communications, selon l'invention ;
- la figure 2 représente un exemple de schéma de terminal client, selon l'invention ;

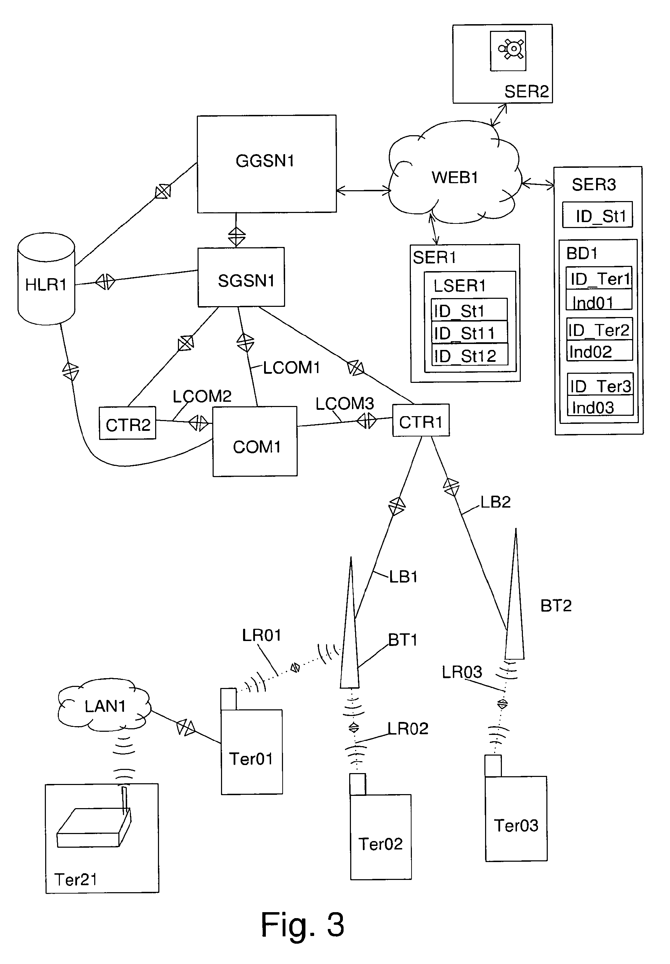

- la figure 3 représente un exemple d'interconnexion de terminaux et de serveurs ;
- la figure 4 représente un exemple d'interconnexion de réseaux ;
- la figure 5 représente un exemple de routage vers un serveur connecté à plusieurs réseaux ;
- la figure 6 représente un exemple de serveur d'identifiants de confiance ;
- les figures 7 et 8 représentent un exemple de procédé de communication selon l'invention ;
- la figure 9 représente un exemple de transactions selon l'invention.

L'invention va à présent être décrite en référence aux figures précédemment citées. Un réseau de télécommunication cellulaire est, par exemple, du type GSM (Global System for Mobile Communications), GPRS (Global Packet Radio Service), UMTS (Universal Mobile Telecommunications System) ou HSDPA (High Speed Downlink Packet Access). Le réseau comprend par exemple des passerelles (GGSN1) d'accès à des serveurs (SER1, SER2, SER3) du réseau Internet (WEB1). Ces serveurs sont par exemple accédés par des terminaux (Ter01, Ter02, Ter03) mobiles du réseau cellulaire de communication par ondes radiofréquences.

Un terminal (Ter01, Ter02, Ter03) mobile, pouvant être un terminal client utilisant le protocole de communication de confiance, est, par exemple, relié au réseau de communication par ondes radiofréquences, en établissant une liaison (LR01, LR02, LR03) radio de communication avec une station (BT1, BT2) de transmission. Les stations de transmission sont, par exemple, des stations de type BTS (Base Transceiver Station) pour le réseau GSM/GPRS ou des stations de type Node B pour le réseau UMTS/HSDPA.

Ces stations de transmission sont gérées, par exemple, par des contrôleurs (CTR1, CTR2) qui commandent, généralement chacun plusieurs stations de transmission. Le contrôleur est relié par des lignes (LB1, LB2) de communication électriques ou optiques, avec les stations de transmission contrôlées par ce contrôleur. Un contrôleur est, par exemple, un contrôleur du type BSC (Base Station Controller) pour le réseau GSM, ou un contrôleur du type RNC (Radio Network Controller) pour le réseau UMTS.

Un routeur (COM1), est par exemple relié par des liaisons (LCOM1, LCOM2, LCOM3) avec les contrôleurs et avec un dispositif d'interface avec la passerelle. Les contrôleurs sont par exemple reliés d'autre part avec le dispositif (SGSN1) d'interface avec une passerelle (GGSN1) d'accès à Internet. La passerelle est, par exemple, associée à un dispositif routeur pour l'acheminement des communications. Le dispositif d'interface est par exemple du type SGSN (Serving GPRS Support Node), associé à une passerelle du type GGSN (Gateway GPRS Support Node). La passerelle, par exemple du type GGSN, est ainsi utilisée comme interface entre un réseau cellulaire (ROP1, ROP2) d'un opérateur et le réseau Internet public ou d'autres réseaux à haut débit. Le dispositif d'interface, la passerelle et le routeur communiquent, par exemple, avec une base (HLR1) de données de gestion des communications, du type HLR (Home Location Register), comprenant pour chaque abonné, l'identité internationale de l'abonné sous la forme de son code IMSI, son numéro d'abonné et la ou les offres de services souscrites auprès de son opérateur de télécommunication. Un dispositif de traitement et de gestion des communications est par exemple associé à la base de données de gestion des communications.

Les noeuds de communication, comme par exemple, les stations de transmission, les contrôleurs ou les routeurs, reliés entre eux par des lignes de communication, permettent de transmettre plusieurs types de données, selon un ou plusieurs types de protocoles de transmission de données. Un réseau peut aussi comprendre des noeuds du type routeur, commutateurs ou coupe-feu. Les données transportées sont par exemple des données représentatives de la voix, de messages de texte, de messages multimédia audio ou vidéo, de données de gestion ou d'autres types de données.

Un terminal mobile est généralement authentifié de façon sûre pour se connecter à un réseau de communication par ondes radiofréquences. De plus l'utilisateur de ce terminal entre un code personnel d'identification, également appelé code PIN, permettant de débloquer l'objet à puce comprenant les données d'abonnement et d'authentification. D'autre part, les évolutions technologiques permettent à un terminal, d'établir des connexions directes avec d'autres appareils ou d'établir des connexions via plusieurs types de réseaux simultanément. Ainsi un terminal mobile tel qu'un ordinateur portable, un téléphone portable ou un assistant personnel de type PDA, peut réaliser un pont entre un serveur dédié aux accès par un réseau cellulaire et un appareil connecté au terminal mobile. De manière non limitative, un terminal (Ter01) mobile comprend, par exemple, une liaison de communication avec un réseau local (LAN1) auquel est relié un terminal (Ter21) communiquant par une liaison WIFI. Un terminal (Ter02) mobile peut aussi être connecté directement à une machine par une liaison filaire, par exemple de type USB (Universal Serial Bus), ou par une liaison radiofréquence, par exemple de type Bluetooth®. Le terminal mobile en liaison avec un réseau cellulaire radiofréquence peut aussi être relié à d'autres types de réseaux. Les terminaux clients utilisant le protocole de confiance, peuvent appartenir à tous types de réseaux, tels que les réseaux désignés par exemple par NGN (New Generation Network), ou des réseaux communautaires, comme par exemple du type MESH ou ADHOC, où les terminaux communicants sur le réseau sont eux-mêmes des noeuds de communication du réseau.

Un réseau cellulaire radiofréquence est, par exemple, interconnecté, par des passerelles, avec plusieurs autres réseaux comme d'autres réseaux cellulaires ou des réseaux de type RNIS (Réseau Numérique à Intégration de Services) pour la téléphonie fixe ou le réseau Internet. Certains opérateurs désignés, par exemple par MVNO (Mobile Virtual Network Operator) proposent par exemple un accès à un réseau sans posséder d'infrastructure de support des communications, comme par exemple les fréquences propres de communication. La sous-traitance massive et les agrégations de contenu sont notamment un facteur d'accroissement du risque de corruption des bases de données et de fraudes relatives aux identifiants.

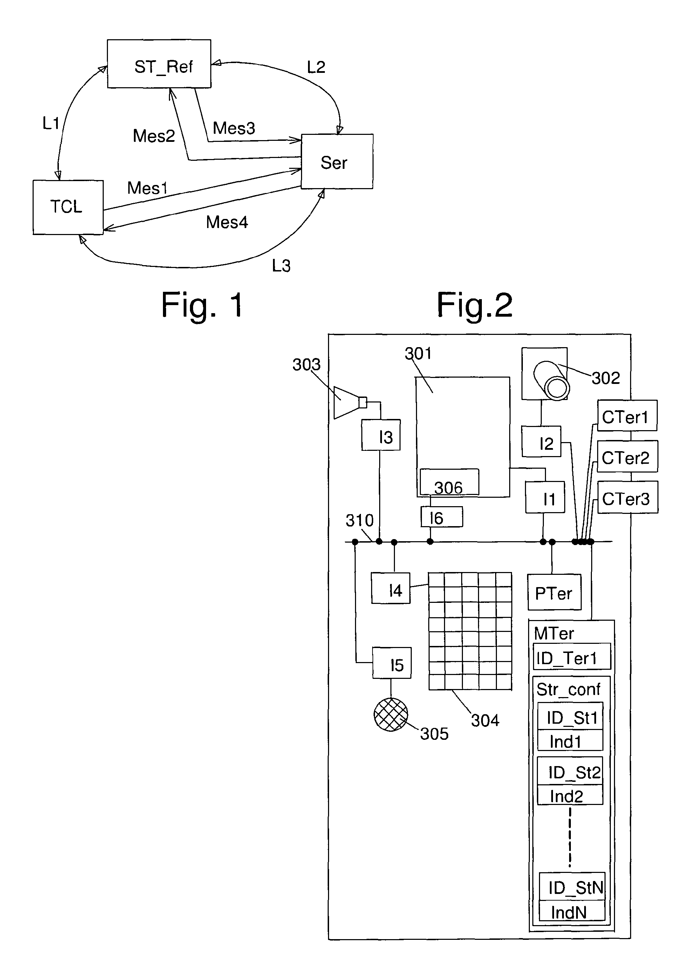

Les multiples interactions possibles d'un terminal avec plusieurs types d'appareils ou de réseaux, sont représentatives de la convergence des technologies. La convergence des technologies implique qu'un service, comme par exemple pour le téléchargement de fichiers de sonnerie pour téléphone, soit accessible par un réseau de communication cellulaire par ondes radiofréquences ou par le réseau Internet ou par un réseau local. Un exemple de terminal mobile de communication par ondes radiofréquences sera notamment décrit par la suite, en référence à la figure 2. Les capacités croissantes des réseaux, par exemple pour les terminaux mobiles, permettent de plus des applications de plus en plus complexes. Le réseau UMTS permet, par exemple, le développement de services de visiophonie qui permettent par exemple un dialogue en visioconférence entre deux personnes. Des applications vidéo, basées sur le réseau UMTS et s'appuyant sur un protocole vidéo mobile, comme par exemple le protocole H324M, permettent par exemple de naviguer rapidement et immédiatement à travers toute une variété de services vidéo tels que la télévision en direct, les caméras en direct, également appelées webcams, ou le pré-enregistrement et le téléchargement vidéo en mode continu dit « streaming ». Les services vidéo peuvent aussi être combinés à des applications interactives exécutées dans le terminal mobile, pour fournir des accès à des serveurs Internet et permettre de parcourir le réseau Internet. Les terminaux clients reliés au réseau Internet peuvent notamment avoir accès à des serveurs destinataires répartis partout dans le monde. Ainsi un terminal peut accéder à un service en envoyant tout type de requête, sous la forme par exemple d'un SMS (Short Message Service) ou d'un MMS (Multimedia messaging Service) ou d'une requête IP. Le terminal peut aussi initialiser une communication par le protocole SIP (Session Initiation Protocol), puis envoyer une requête vers un serveur en utilisant le protocole RTP (Real-time Transport Protocol) ou le protocole HTTP (HyperText Transfer Protocol) ou le protocole FTP (File Transfer Protocol). Les équipements de gestion des sessions comprennent, par exemple le protocole Radius (Remote Authentication Dial-In User Service) ou le protocole DHCP (Dynamic Host Configuration Protocol), le système DNS (Domain Name System) associé à la procédure ENUM qui permet d'utiliser un numéro de téléphone comme clé de recherche dans le DNS ou encore le protocole LDAP (Lightweight Directory Access Protocol).

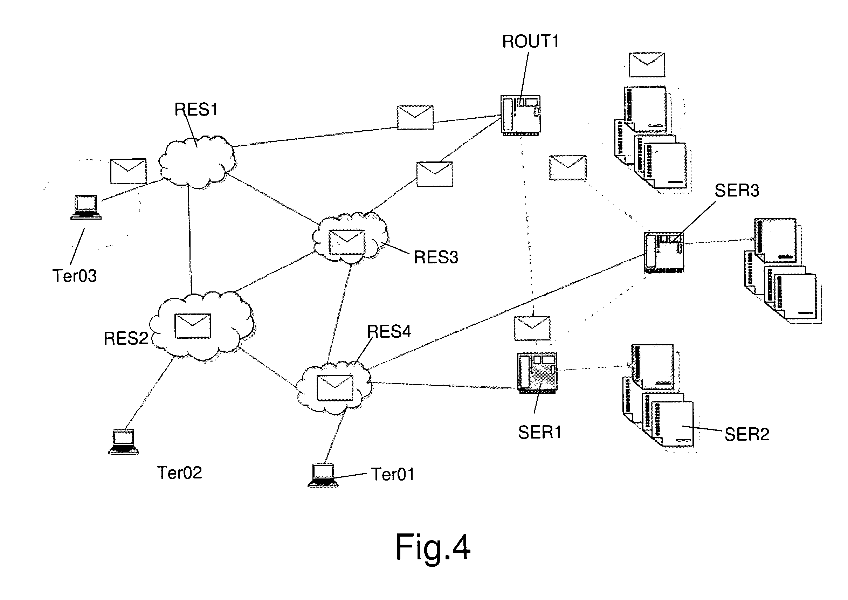

De plus lorsqu'un terminal client envoie une requête à destination d'un terminal serveur, la requête peut emprunter plusieurs chemins différents pour arriver jusqu'au serveur. Différents modes de transmission des messages sont en effet susceptibles d'être appliqués pour le routage des messages. Un premier serveur (SER1) de sécurité en communication avec un terminal (Ter02, Ter03) client, réalise par exemple un premier filtrage de sécurité, avant d'adresser les requêtes du client, vers un second serveur (Ser21, Ser2) fournissant le service au terminal client. Mais le premier serveur de sécurité peut recevoir des requêtes provenant d'une multitude de réseaux (LAN1, ROP2, ROP1) possibles ou transmises par une multitude de serveurs (SER3) ou de relais ou de routeurs (ROUT1) ou de passerelles possibles ou d'autres types de noeud de communication. Comme représenté à la figure 4, la requête peut passer par plusieurs réseaux (RES1, RES2, RES3, RES4).

Comme schématisé à la figure 1, un terminal client (TCL), tel qu'un terminal mobile relié au réseau de communication par ondes radiofréquences ou un terminal relié au réseau Internet ou un autre terminal de communication relié à un ou plusieurs réseaux de télécommunication, communique, par exemple, avec un serveur (Ser) destinataire ou avec une station (ST_Ref) de confiance de référence, par des liaisons (L1, L3) de communication permettant l'envoi et la réception de messages (Mes1, Mes4). La station (ST_Ref) de confiance de référence communique d'autre part avec le serveur (Ser) destinataire, par une liaison (L2) de communication, pour l'envoi ou la réception de messages (Mes2, Mes3). De manière non limitative, la station de confiance de référence peut être un agent communicant du réseau, de type serveur Internet ou un noeud du réseau, comme par exemple un dispositif routeur ou un relais ou une passerelle. Ainsi la station de confiance peut être, de manière non limitative :
- un point de collecte d'informations sur le trafic dans son réseau ou,
- un point d'accès au trafic pour le terminal client ou,
- un point d'accès au service demandé par requête du terminal client.

Le serveur destinataire, à la réception d'une requête (Mes1) par le terminal client (TCL) peut, par exemple, faire référence à la station (ST_Ref) de confiance de référence, par l'envoi d'une requête (Mes2) avec réception d'une réponse (Mes3) à cette requête, avant d'envoyer une réponse (Mes4) à la requête du terminal client (TCL). Dans le cas où la station (ST_Ref) de référence est un noeud intermédiaire entre le terminal (TCL) client et le serveur (Ser) destinataire, un indice de confiance peut être incorporé, de manière non limitative, directement dans la requête, par la station de confiance de référence, de façon à être extraite par le serveur (Ser) destinataire. La présente invention facilite notamment la transmission des données en apportant un outil de sécurisation des échanges permettant l'utilisation de plusieurs chemins de routage ou l'agrégation de données, par son approche coopérative et non hiérarchique, proposant par exemple une traçabilité des messages, tels que des requêtes ou des réponses à des requêtes, en fonction d'un ou plusieurs indices de confiance.

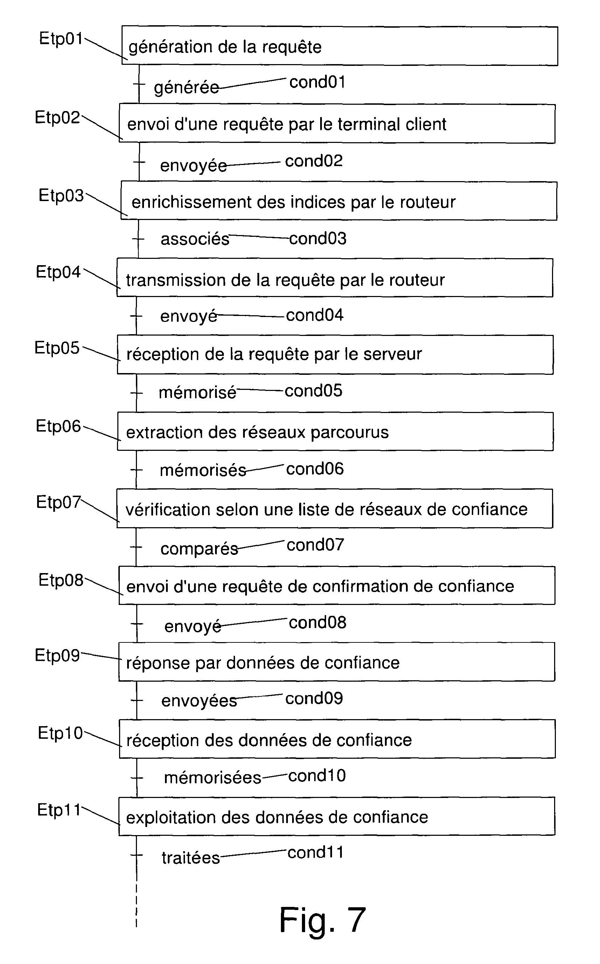

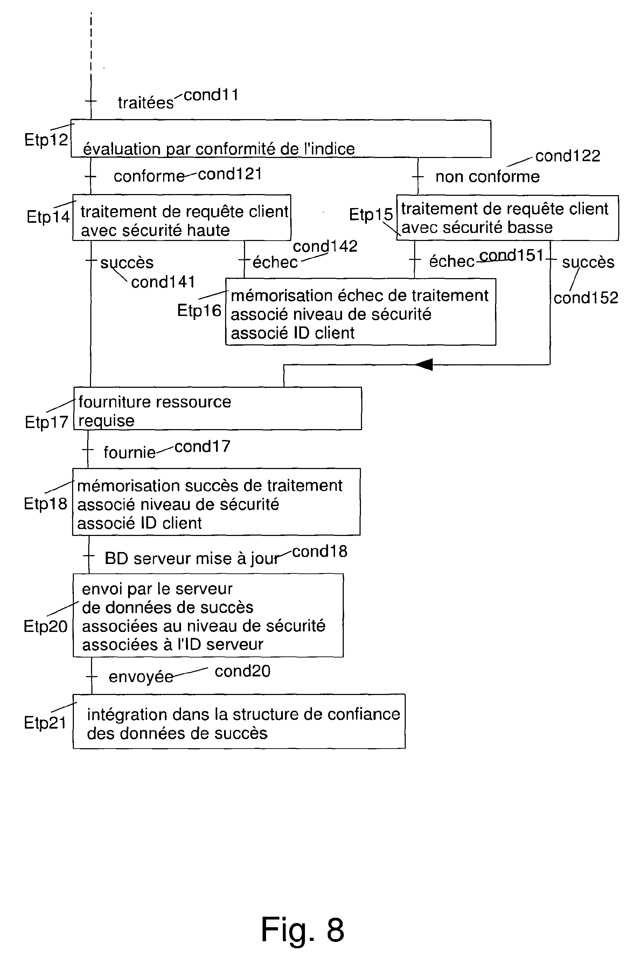

Un exemple de procédé de communication va maintenant être décrit, en référence aux figures 7 et 8. De manière non limitative, l'utilisateur démarre une communication à plusieurs niveaux de sécurité, en activant une structure (Str_conf) de confiance, mémorisée en mémoire (MTer) du terminal mobile. De manière non limitative, la structure (Str_conf) de confiance peut être mémorisée dans une mémoire non volatile du terminal ou dans un module amovible d'identification de l'utilisateur, également désigné par carte SIM (Subscriber Identity Module). L'utilisateur est ainsi libre de choisir d'utiliser ou non sa structure (Str_conf) de confiance. De cette façon, un utilisateur ne souhaitant pas collecter et archiver des informations de confiance relatives à ses activités sur différents serveurs fréquentés, peut désactiver sa structure de confiance ou la réinitialiser.

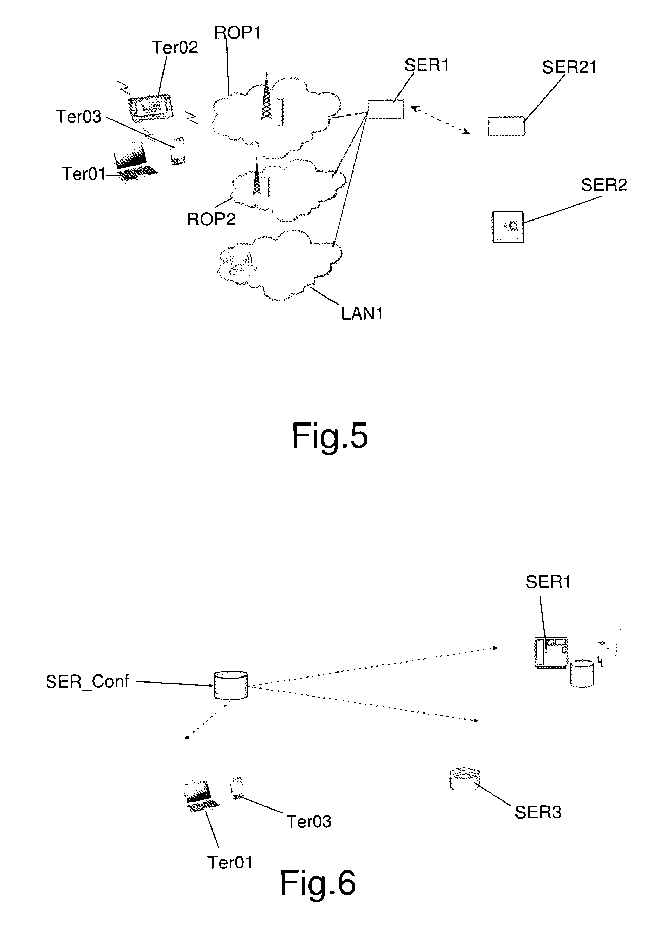

De manière non limitative, comme représenté à la figure 6, l'identifiant de confiance (ID_Ter1) ou la structure (Str_conf) de confiance peut être initialisé par un serveur (SER_Conf) fournissant, par exemple, des identifiants de confiance (ID_Ter1, ID_St1) pour des terminaux (Ter01, Ter03) clients ou pour des serveurs (SER1, SER3) participant à cette méthode de capitalisation de la confiance réciproque. Une structure (Str_conf) de confiance peut aussi être initialisée par un serveur lors d'une première connexion avec le procédé de confiance activé, le serveur (SER1, SER3) fournissant alors au terminal son identifiant de confiance. De manière non limitative, un serveur central de gestion de confiance dépositaire d'indices de confiance comprend une base de données mémorisant des structures de confiance associées chacune à un identifiant propre à un terminal client déterminé. Une structure de confiance comprend, par exemple, un ou plusieurs indices de confiance chacun associé à :
- un identifiant d'une station de confiance comme producteur de l'indice,
- une valeur décimale représentative d'une confiance accordée par le producteur, au détenteur de l'indice de confiance, le détenteur correspondant à l'identifiant du terminal auquel la structure est associée,
- une valeur temporelle représentative d'une date de création de l'indice, correspondant par exemple à une date d'évaluation ou d'affectation de l'indice,
- une durée de vie de l'indice avant expiration de sa validité.

De manière non limitative, la structure mémorisée dans le terminal client peut être associée à un identifiant du serveur central de gestion de confiance, comme dépositaire d'un ou plusieurs indices de confiance. L'identifiant du dépositaire pourra, par exemple, être fourni par le terminal client, au serveur destinataire. Ainsi le serveur central de gestion de confiance pourra être interrogé, par exemple par une requête envoyée par un serveur destinataire, lors d'une opération de vérification ou par un terminal client lors d'une mise à jour de sa structure de confiance.

Une étape (Etp01) de génération d'une requête destinée à un serveur (Ser) destinataire est, par exemple, exécutée par le terminal (TCL) client. La requête générée par un composant de traitement du terminal, comprend, de manière non limitative :
- un identifiant (ID_Ter1) de confiance du terminal, par exemple spécifique à la structure de confiance et distinct des identifiants tels que le code IMSI (International Mobile Subscriber Identity) ou le code IMEI (International Mobile Equipment Identity),
- un mot de passe ou une clé d'authentification,
- un ordre correspondant aux services ou aux données demandées par la requête du terminal,
- un ou plusieurs indices de confiance (Ind1, Ind2, IndN) chacun associé à une référence (ID_St1, ID_St2, ID_STN) vers une station de confiance,
- un ou plusieurs attributs associés à chaque indice de confiance parmi : un attribut représentatif d'une date de mise à jour de l'indice de confiance, un attribut représentatif d'une durée de vie avant expiration de la validité de l'indice de confiance, un attribut représentatif d'une valeur décimale de l'indice de confiance.

Après la génération (cond01) de la requête, l'envoi de la requête est, par exemple réalisé, par le terminal client, lors d'une étape (Etp02) suivante.

Après l'envoi (cond02) de la requête vers le serveur destinataire, un ou plusieurs routeurs réalisent, par exemple un enrichissement par des indices de confiance supplémentaires, lors d'une étape (Etp03) suivante. Chaque routeur ou noeud de communication recevant et traitant la requête de façon à l'acheminer jusqu'au serveur destinataire, ajoute par exemple un indice de confiance dont la valeur est représentative du parcours emprunté par la requête, jusqu'au routeur. Cet indice de confiance est notamment associé à une référence de ce routeur. Le routeur ou le noeud de communication peut aussi réaliser une pondération des indices de confiance.

Après (cond03) l'association à la requête d'un parcourt et d'une référence du routeur ou après une pondération des indices de confiance, le routeur réalise, par exemple, une transmission de la requête vers le serveur destinataire, selon un chemin déterminé, lors d'une étape (Etp04) suivante. De manière non limitative, la requête est transmise vers un terminal serveur d'un même réseau ou vers un terminal serveur d'un réseau différent en passant par une ou plusieurs passerelles ou en passant par un ou plusieurs routeurs.

Après (cond04) la transmission de la requête par le routeur, la requête est, par exemple reçue par le serveur destinataire, lors d'une étape (Etp05) suivante. La requête gérée par une interface logicielle et matérielle de communication, est par exemple mémorisée dans un espace temporaire de travail.

Après (cond05) la mémorisation de la requête provenant du terminal client, le serveur destinataire exécute par exemple une étape (Etp06) de lecture de la requête et d'extraction du ou des indices représentatifs du parcours de la requête. Le parcours est par exemple traité pour déterminer l'ensemble des différents réseaux par lesquels est passée la requête.

Après (cond06) la mémorisation de données représentatives des différents réseaux parcourus, une étape (Etp07) suivante de vérification par une liste de réseaux de confiance est, par exemple exécutée par le serveur destinataire. Cette liste de réseaux de confiance conformes à un critère de confiance, est, par exemple mémorisée par le serveur destinataire et comprend, par exemple, un ensemble de réseaux pour lesquels la connexion d'un terminal nécessite une authentification du terminal. Un réseau cellulaire de communication par ondes radiofréquences est, exemple compris dans cette liste de réseaux de confiance, la connexion d'un terminal mobile nécessitant une authentification selon une sécurité renforcée et les communications sur le réseau cellulaire étant de plus cryptées. Un réseau local interne d'une entreprise, par exemple de type Ethernet, pourra aussi appartenir à la liste des réseaux de confiance. Au contraire un réseau non protégé dont l'accès est laissé libre au public, accédé par exemple par des liaisons de type Wi-Fi, sera exclu de la liste de confiance. Les réseaux parcourus sont par exemple comparés chacun avec les réseaux de confiance de la liste afin d'évaluer un ou plusieurs indices de confiance de la requête, selon un critère de confiance déterminé. Si tous les réseaux appartiennent à la liste des réseaux de confiance, le critère de confiance sur la requête est, par exemple, considéré comme respecté. Si un ou plusieurs réseaux n'appartiennent pas à la liste des réseaux de confiance, la requête est, par exemple, évaluée non conforme au critère de confiance. Le terminal pourra aussi comprendre une liste complémentaire de réseaux non conformes au critère de confiance. De manière non limitative, le procédé de communication comprend une ou plusieurs évaluations d'indices de confiance selon un ou plusieurs critères de confiance.

De manière non limitative, après la comparaison (cond07) pour l'évaluation selon le critère de confiance relatif à la liste de réseaux de confiance, une autre étape (Etp08) de vérification selon un autre critère de confiance, est par exemple exécutée. Cette étape (Etp08) comprend, par exemple, l'envoi d'une requête de confirmation de confiance, par le serveur (SER1) destinataire, à une station de confiance référencée associée à un indice de confiance transmis dans la requête du terminal client. De manière non limitative, le serveur destinataire peut se référer à une station de confiance productrice d'un l'indice de confiance ou au serveur central de gestion de confiance si l'identifiant du serveur central a été fourni par le terminal client, au serveur destinataire. Le serveur central de gestion de confiance permet par exemple de fournir une réponse à une requête de confirmation de l'exactitude d'indices de confiance fournis. Le serveur central de gestion peut aussi fournir des identifiants de confiance relatifs au terminal client associés chacun à un identifiant de station de confiance de référence.

De manière non limitative, l'identifiant (ID_St1) de confiance de la station (SER3) de confiance, fournie par le terminal client ou par le serveur central de gestion de confiance, est connu par le serveur (SER1) destinataire qui comprend, par exemple, une liste (LSER1) d'identifiants de stations (ID_St1, ID_St11, ID_St12) de confiance. La requête comprend, par exemple, plusieurs indices (Ind1, Ind2 ou respectivement IndN) de confiance associés chacun à une référence (ID_St1, ID_St2 ou respectivement ID_STN) vers une station. Le serveur destinataire exécute, par exemple, une sélection des indices de confiance en fonction des stations de confiance de référence, connues dans sa liste, pour envoyer une ou plusieurs requêtes de confirmation de confiance à ces stations de confiance ayant produit les indices de confiance. De manière non limitative, la requête de confirmation de confiance comprend au moins :
- l'identifiant (ID_Ter1) de confiance du terminal client, ou
- l'indice (Ind1) de confiance associé à la station de confiance référencée par son identifiant (ID_St1).

Après l'envoi (cond08) de la requête de confirmation de confiance, à la station de confiance, par le serveur destinataire, la requête est, par exemple traitée par la station de confiance de référence, dans une étape (Etp09) suivante pour produire une réponse à la requête comprenant des données de confiance. Après (cond09) que la réponse ait été envoyée, le serveur destinataire réalise, par exemple, la réception de la réponse à sa requête lors d'une étape (Etp10) suivante. Après la mémorisation (cond10) de cette réponse, une étape (Etp11) suivante de traitement des données de confiance est, par exemple, réalisée par le serveur destinataire pour déterminer si l'indice de confiance fourni par le terminal client, est conforme à un critère de confiance en relation avec la station de confiance de référence.

Des exemples de données de confiance et de leur traitement vont maintenant être décrits. La station de référence est par exemple un serveur similaire au serveur destinataire. Un site de vente en ligne pourra, par exemple, se mettre en relation avec un autre site de vente en ligne équivalent ou partenaire pour s'assurer que l'utilisateur du terminal client est doté d'un ensemble de qualités requises pour ce site. Le serveur destinataire et la station de confiance de référence peuvent ainsi établir une relation d'échange d'informations relatives à un même terminal client. La station de confiance de référence recevant la requête de confirmation de confiance, extrait par exemple, l'identifiant (ID_Ter1) du terminal client ou l'indice (Ind1) relatif à la station de confiance, fourni par le terminal client. Après extraction de l'identifiant (ID_Ter1) ou de l'indice (Ind1), la station (SER3) de confiance recherche, par exemple, dans sa base de données des informations correspondantes. La station (SER3) de confiance extrayant et retrouvant dans sa base de données, l'identifiant (ID_Ter1) du terminal, répond par exemple à la requête de confirmation de confiance, en fournissant l'indice (Ind01) de confiance associé dans sa base de données. De même la station de confiance peut associer à un indice, un identifiant de terminal associé dans sa base de données. Le serveur (SER1) destinataire, à la réception de la réponse, peut comparer l'indice ou l'identifiant fournis par la station de confiance, avec ceux fournis par le terminal. Si la comparaison correspond, l'indice de confiance est alors conforme au critère de confiance. Dans le cas contraire l'indice n'est pas conforme.

Une clé et une signature peuvent aussi être associées à un indice de confiance ou à un identifiant de terminal client, dans la base (BD1) de données de la station de référence. La clé et la signature sont par exemple transmises lors de la réponse à la requête de confirmation de confiance. Le serveur (SER1) destinataire, recevant la réponse peut alors traiter l'indice de confiance fourni par le terminal client pour en extraire une signature selon la clé fournie afin de vérifier si la signature extraite de la requête du terminal client, correspond à la signature fournie par la station de confiance.

Après (cond11) le traitement des données de confirmation de confiance, une étape (Etp12) suivante d'évaluation de l'ensemble des indices est, par exemple, exécutée par le serveur (SER1) destinataire, si plusieurs indices de confiance ont été évalués chacun selon un critère de confiance associé. De manière non limitative, la mise en relation des indices évalués comprend par exemple un moyennage des indices ou une sélection de l'indice le plus favorable ou le moins favorable par rapport à son critère de confiance associé. Des indices, donnant une valeur de confiance graduelle sur une échelle de confiance, sont par exemple avantageusement moyennés ou corrélés par un ensemble de pondérations, pour donner un indice de confiance global. Un ensemble d'indices représentatifs des réseaux parcourus est par exemple assimilé à l'indice le moins favorable.

Après l'évaluation d'un indice global, ou après l'évaluation d'un indice unique, conforme à son critère de confiance (cond122), le serveur (SER1) destinataire exécute, par exemple, une étape (Etp15) suivante de traitement de la requête envoyée par le terminal client, avec un niveau bas de sécurité.

Après l'évaluation d'un indice global, ou après l'évaluation d'un indice unique, non conforme à son critère de confiance (cond121), le serveur destinataire (SER1) exécute, par exemple, une étape (Etp14) suivante de traitement de la requête envoyée par le terminal client, avec un niveau haut de sécurité.

Le traitement de sécurité n'est pas limité à deux niveaux de sécurité et un indice de confiance peut être évalué graduellement selon plusieurs niveaux, pour faire correspondre un niveau de sécurité graduel. De cette façon le serveur (SER1) destinataire peut se prémunir contre des requêtes estimées risquées par une procédure lourde de vérification ou d'authentification. D'autre part, le serveur destinataire peut réaliser un traitement de sécurité plus rapide voire absent pour des requêtes estimées plus sûres. Par exemple dans le cas où une requête a déjà été traitée par un procédé de sécurité, par le noeud (SER21) de communication immédiatement précédent, le serveur (SER2) destinataire ne réalise pas de procédure de sécurité. Le serveur de sécurité peut notamment vérifier rapidement auprès du noeud précédent que la procédure de sécurité a bien été exécutée. De plus le serveur destinataire peut recevoir, en parallèle, des requêtes provenant d'autres noeuds de communication considérés comme moins sûrs, une procédure de sécurité supplémentaire étant alors réalisée. De manière non limitative, une telle procédure de sécurité supplémentaire sera, par exemple, exécutée lorsque le serveur destinataire est inactif, de façon à ne pas ralentir le transfert de données avec le noeud de communication considéré comme sûr.

De manière non limitative, le traitement de la requête comprend des échanges de messages pour réaliser une authentification du terminal client ou une authentification mutuelle entre le terminal client et le serveur destinataire, par une clé d'authentification. De manière non limitative, le traitement de la requête peut aussi comprendre une identification par identifiant de connexion et mot de passe. Le procédé de communication par gestion de la confiance basée sur les indices de confiance, pourra avantageusement être associé à des procédés existants comme l'identification ou l'authentification ou à des solutions dites « anti-phishing », permettant de certifier au terminal client, l'identité du serveur destinataire.

En cas d'échec (cond142, cond151) du traitement de la requête, une étape (Etp16) suivante de mémorisation de l'échec est par exemple exécutée. Cette mémorisation comprend une mémorisation, par le serveur destinataire, dans sa base de données, de l'identifiant (ID_Ter1) de confiance du terminal client associé au niveau de sécurité du traitement et associé à des données représentatives du traitement exécuté. La ressource demandée par la requête du terminal client est notamment non fournie au terminal client. Ainsi un terminal client frauduleux ou erroné est désigné dans une base de donnée d'archivage et de collecte d'informations de confiance du serveur destinataire. Ce terminal pourra ainsi être signalé à d'autres serveurs, lorsque le serveur (SER1) destinataire est appelé comme station de confiance de référence, lors de communications suivantes. Le serveur destinataire peut aussi envoyer, au serveur central de gestion de confiance, des données représentatives de l'identifiant (ID_Ter1) de confiance du terminal client associé à un indice de confiance, produit par le serveur destinataire et correspondant au niveau de sécurité du traitement ayant échoué.

En cas (cond141, cond152) de succès du traitement de la requête, la ressource requêtée par le terminal (TCL) client est fournie par le serveur destinataire, au terminal client, lors d'une étape (Etp17) suivante.

Après la fourniture (cond17) de la ressource, une étape (Etp18) suivante de mémorisation du succès du traitement est, par exemple exécutée par le serveur (SER1) destinataire. Le serveur (SER1) destinataire mémorise, par exemple dans sa base de données, un identifiant de confiance (ID_Ter1) du terminal client associé à des données représentatives d'un indice de confiance représentatif du traitement exécuté selon le niveau de sécurité déterminé. Ainsi de façon avantageuse un terminal client ayant déjà effectué des opérations de traitement de requête ou de vérification, avec succès, pourra être recommandé par ce serveur (SER1) destinataire. L'utilisateur a alors intérêt à activer sa structure (Str_conf) de confiance pour que les futurs serveurs visités réalisent des procédures de sécurité en tenant compte des traitements favorables à l'utilisateur, déjà réalisés.

Après (cond18) la mise à jour de la base de données d'archives de confiance du serveur (SER1) destinataire, une étape (Etp20) suivante d'envoi, au terminal client ou au serveur central de gestion de confiance, de données de succès de traitement, est par exemple exécutée par le serveur (SER1) destinataire. Ces données de succès de traitement comprennent par exemple un identifiant de confiance du serveur (SER1) destinataire, associé à des données représentatives d'un indice de confiance représentatif du traitement réalisé selon le niveau de sécurité et éventuellement un identifiant du terminal client envoyé au serveur central de gestion de confiance. Ainsi le serveur central de gestion de confiance peut enrichir sa base de données.

De manière non limitative, les données produites par le serveur destinataire, comprennent aussi un ou plusieurs attributs associés à chaque indice de confiance parmi : un attribut représentatif d'une date de mise à jour de l'indice de confiance, un attribut représentatif d'une durée de vie avant expiration de la validité de l'indice de confiance, un attribut représentatif d'une valeur décimale de l'indice de confiance.

Après l'envoi (cond20) des données de succès du traitement, par le serveur (SER1) destinataire, ces données sont par exemple réceptionnées et intégrées, par le terminal client, lors d'une étape (Etp21) suivante. La structure (Str_conf) de confiance du terminal client est, par exemple enrichie par ces nouvelles données. Le terminal client extrait et mémorise, par exemple, dans sa structure de confiance, des données représentatives de l'identifiant du serveur associées à l'indice de confiance fourni par le serveur. Les indices de confiance sont, par exemple, mémorisés en association avec leurs attributs. Ainsi un utilisateur a alors intérêt à activer sa structure de confiance qui permettra de fournir des références représentatives de traitements favorables, aux futurs serveurs destinataires. Les futurs traitements de sécurité pourront, par exemple, être accélérés pour le terminal client, relativement à la sensibilité des transactions ou des données demandées par la requête envoyée par le terminal client, vers un serveur destinataire.

Les désignations de terminal client et de serveur ne sont pas limitatives et un terminal mobile peut aussi recevoir des requêtes d'une station fixe ou mobile. Les rôles de client et de serveur peuvent notamment être intervertis. Une station de référence peut par exemple être un autre terminal, comme par exemple un terminal mobile, les terminaux mobiles communiquant entre eux, par exemple, afin de déterminer si un indice de confiance d'une station fixe est conforme ou non à un critère de confiance.

De façon avantageuse un utilisateur d'un terminal client ne réalisant pas de manoeuvres frauduleuses ou erronées pourra accumuler des données représentatives des succès de traitements en relation avec différents serveurs. Des serveurs pourront aussi se regrouper pour bénéficier d'une expérience commune pour des utilisateurs ayant souscrit à leur système de vérification de confiance, afin de détecter des terminaux clients respectant leurs critères de confiance et traiter plus rapidement et plus sûrement leurs requêtes.

La figure 2 représente un exemple non limitatif de terminal client réalisé par un terminal mobile de télécommunication, comme par exemple un téléphone cellulaire. Le terminal mobile comprend, par exemple, une unité (Pter) de calcul en communication via un bus (310) de données, avec une mémoire (MTer) et avec plusieurs interfaces (I1, I2, I3, I4, I5, I6) de communication. Différents éléments constituent de manière non limitative, une interface de communication avec l'utilisateur : le terminal mobile comprend par exemple un microphone (305) d'enregistrement de la voix de l'utilisateur, un haut (303) parleur, un écran (301) d'affichage, un clavier (304), une dalle tactile (306) ou une caméra (302). Chacun des éléments constituant l'interface utilisateur est, de manière non limitative, en communication avec le bus de données, via son interface de communication. Chacun des composants ou modules du terminal mobile, à l'exception de l'unité de calcul, est contrôlé par un dispositif de contrôle non représenté ou par l'unité (PTer) de calcul. L'unité de calcul, par exemple un circuit intégré de type ASIC ou un microcontrôleur ou un processeur, traite des données sous forme numérique. Le terminal mobile comprend aussi une interface de communication avec un module d'identification, désigné par carte SIM, comprenant un organe de traitement, un organe d'interface et un organe de mémorisation. La carte SIM peut ainsi prendre en charge une partie des traitements ou des données stockées.

Le terminal mobile comprend, de manière non limitative, plusieurs interfaces (CTer1, CTer2, CTer3) de communication avec l'extérieur, reliées au bus (310) de données pour recevoir ou fournir des données représentatives de données échangées avec l'extérieur du terminal. Une interface de communication avec l'extérieur du terminal est, par exemple, du type communication par ondes radiofréquences avec un réseau cellulaire. Une autre interface de communication avec l'extérieur du terminal est, par exemple, du type communication par ondes radiofréquences à courte portée comme Bluetooth® ou Wi-Fi. Une autre interface de communication avec l'extérieur du terminal est, par exemple, du type filaire comme USB ou Firewire ou d'autres types de liaisons série ou parallèle.

Les interfaces de communication avec l'extérieur comprennent par exemple chacune un module de modulation et un module de démodulation. Le signal en entrée du module de modulation ou en sortie du module de démodulation, comprend par exemple différentes données dépendantes, de manière non limitative, du protocole de communication et de l'information transmise.

L'activation ou la désactivation de la structure (Str_conf) de confiance est, par exemple réalisée par l'utilisateur utilisant un menu interactif de réglage de l'état de la structure de confiance. De manière non limitative, l'activation de la structure de confiance provoque une incorporation automatique par le module (PTer) de traitement, d'une partie ou de l'ensemble des données de la structure (Str_conf) de confiance, dans une requête destinée à un serveur destinataire. L'activation de la structure (Str_conf) de confiance peut aussi provoquer de façon automatique l'ajout d'une couche supplémentaire correspondant à un protocole de communication, ce protocole supplémentaire étant disposé au-dessus de la couche protocolaire d'application, en se référant, par exemple aux protocoles de communication OSI. Rappelons que la couche applicative est par exemple disposée au-dessus de la couche de présentation qui est par exemple disposée au-dessus de la couche de session. La couche de session est par exemple disposée au-dessus de la souche de transport qui est disposée au-dessus de la couche de réseau. La couche de réseau est, par exemple disposée au-dessus de la couche de liaison qui est disposée au-dessus de la couche physique.

Le protocole de confiance est, par exemple mis en oeuvre grâce à l'utilisation de champs optionnels non utilisés des protocoles existants. Le protocole de confiance est, par exemple, encapsulé dans le protocole IP, par l'utilisation des champs optionnels. Un protocole existant, comme par exemple le protocole IP, peut aussi être utilisé pour transmettre les informations de confiance associées à des données cryptées correspondant à la requête ou aux paquets à transmettre. Ainsi le protocole de confiance peut être rapidement et facilement mis en oeuvre.

De manière non limitative, une nouvelle structure de communication peut aussi être associée au protocole de confiance correspondant à un nouveau protocole de communication mis en oeuvre et remplaçant, par exemple, le protocole IP. Une nouvelle structure permettrait ainsi une plus grande souplesse dans l'élaboration des nouvelles fonctionnalités relatives, par exemple, à la notion de confiance.

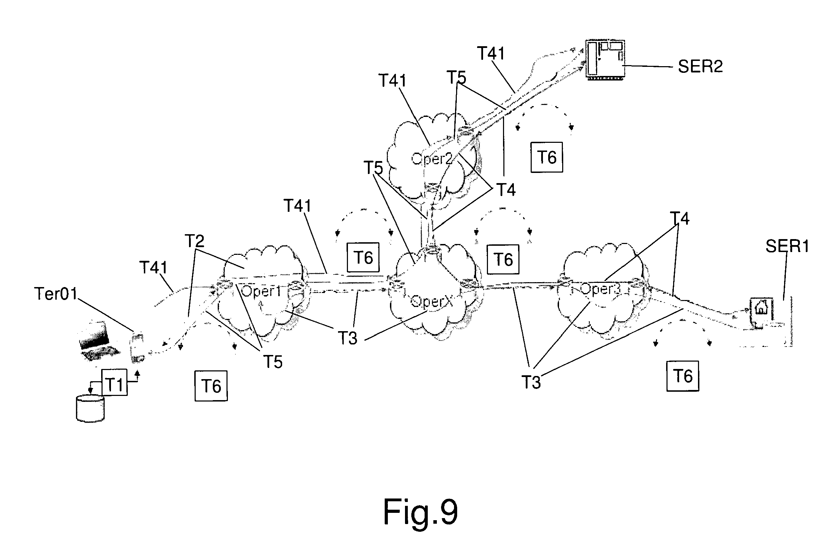

La figure 9 représente plusieurs transactions entre un terminal (Ter01) client et des serveurs (SER1, SER2), les messages échangés passant par plusieurs structures de transport (Oper1, OperX, Oper3, Oper2).

Un utilisateur prépare, par exemple, sa connexion en activant (T1) une couche protocolaire d'indice de confiance, au-dessus de la couche applicative. De manière non limitative, le terminal envoie aussi une requête de connexion au réseau. Son indice de confiance est notamment inséré dans un profil destiné à certifier l'intégrité des requêtes envoyées ou à permettre une traçabilité.

Le terminal de l'opérateur se connecte (T2) par exemple ensuite avec le réseau de son opérateur (Oper1). Une requête de connexion de l'utilisateur est par exemple, envoyée vers le service de connexion de son opérateur (Oper1). La connexion comprend, par exemple une phase d'identification et d'authentification du terminal dans le réseau. De manière non limitative, le terminal échange, par exemple des indices avec son point de connexion au réseau. Les indices de confiance fournis, sont, par exemple évalués et pondérés. La connexion est, par exemple établie en fonction des pondérations des indices de confiance. Ainsi la phase de connexion peut être conditionnée par l'indice de confiance. Cette connexion conditionnelle permet notamment un contrôle de l'intégrité de la requête ou une traçabilité de l'action.

De manière non limitative, une connexion (T3) de l'utilisateur au service, par exemple pour du commerce en ligne, via plusieurs opérateurs (Oper1, Oper2) est, par exemple ensuite réalisée. Une requête de connexion de l'utilisateur, vers le service, est par exemple envoyée via des opérateurs (Oper1, Oper2) intermédiaires. De manière non limitative, la connexion comprend une phase d'identification et d'authentification, à travers le réseau, entre le client et le serveur (SER3). Une phase d'échange des indices de confiance est par exemple aussi réalisée de façon à contrôler l'intégrité des requêtes et permettre une traçabilité de l'action. L'échange des indices est par exemple suivi d'une phase d'évaluation et de pondération des indices de confiance entre le client et le serveur. Ainsi le client peut choisir, en fonction de la pondération, de réaliser ou non des actes en relation avec ce serveur et si oui effectuer, par exemple auparavant, des procédures de sécurité. Le client autorise ou non, par exemple, la communication d'informations concernant sa carte bancaire ou d'informations relatives à sa vie privée. De même la plateforme de service accepte ou non la transaction, en fonction des indices de confiance, et si oui, la plateforme exécute, par exemple des procédures de renforcement de l'authentification, avant l'acceptation d'un payement en ligne. Une définition des seuils d'achats est par exemple réalisée pour accéder aux services de façon sécurisée, avec des options limitées. Des achats sont, par exemple ensuite réalisés.

Une connexion (T4) est, par exemple, ensuite réalisée entre la plateforme de service (SER1), vers la banque (SER2) de l'utilisateur, via des opérateurs intermédiaires (Oper2, Oper3). Une requête de connexion est par exemple envoyée, par la plateforme (SER1) de service, à la banque de l'utilisateur. Cette connexion comprend, par exemple, une phase d'identification et d'authentification à travers le réseau, entre le la plateforme (SER1) de service et la banque (SER2). De manière non limitative, des indices de confiance sont par exemple échangés permettant de contrôler l'intégrité des requêtes et permettre une traçabilité de l'action. Une phase d'évaluation et de pondération des indices de confiance est par exemple exécutée pour permettre, par exemple, un choix de la part de la banque, pour réaliser ou non la transaction et si oui selon quelles modalités. En fonction, par exemple, d'une évaluation du niveau de sécurité, la banque communique ou non des informations concernant le client, comme par exemple son crédit. De même la phase d'évaluation et de pondération permet le choix de la part de la plateforme (SER1) de service d'accepter ou non la transaction et si oui selon quelles modalités. En fonction du niveau de sécurité, la plateforme de service, accepte ou non un paiement avec la banque (SER2), par exemple en fonction de seuils d'achats déterminés ou d'options d'accès à des services, comme par exemple des services d'assurance. La transaction bancaire est, par exemple, réalisée.

En parallèle de la connexion (T3) de l'utilisateur (Ter01) au service (SER1), et la connexion (T4) entre la plateforme (SER1) de service et vers la banque (SER2) de l'utilisateur, l'utilisateur réalise par exemple une connexion (T41) à la banque (SER2) du service de commerce en ligne, via des opérateurs intermédiaires. Une requête de connexion est, par exemple envoyée par l'utilisateur (Ter01), vers la banque du service. De manière non limitative, le schéma de la figure 9 représente un accès aux banques de l'utilisateur et du service commercial en ligne, par un même serveur (SER2). De manière non limitative, la connexion comprend une phase d'identification et d'authentification, à travers le réseau, entre le client et la banque. De manière non limitative, une phase d'échange des indices de confiance est par exemple réalisée, permettant un contrôle d'intégrité et une traçabilité de l'action. L'échange des indices de confiance est, par exemple, suivi d'une phase d'évaluation et de pondération des indices de confiance entre le client et la banque du service commercial en ligne. Ainsi le choix de la part du client est possible pour la réalisation ou non des actes ou des transactions et si oui selon quelles modalités. Par exemple en fonction du niveau de sécurité ou de garantie, la communication d'informations concernant sa carte bancaire ou sa vie privée, sera ou non réalisée. Les achats sont, par exemple réalisés.

Une notification (T5) de la banque est par exemple envoyée à travers le réseau, au client pour la confirmation de la transaction. La notification est, par exemple réalisée par des messages de type courrier électronique ou SMS afin de confirmer la transaction. Le terminal client réalise par exemple une évaluation et une pondération des indices de confiance afin de choisir d'accepter cette transaction ou de contester la transaction.

De plus tout au long de la chaîne de transaction une capitalisation (T6) des indices de confiance de l'ensemble de la chaîne de transaction est réalisée. Chaque acteur de la transaction pondère ou majore des indices de confiance. De manière non limitative, dans une communauté de confiance, une base de données commune peut, par exemple servir, pour le stockage des indices de confiance.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de communication entre un terminal (TCL) client et un serveur (Ser), le terminal client et le serveur étant reliés à un réseau de télécommunication, le terminal client comprenant un composant de traitement, un composant de mémorisation et un module d'interface de communication,
le procédé comprenant au moins une étape (Etp02) d'envoi, par le terminal client, d'une requête au serveur, **caractérisé en ce que** le terminal client mémorisant une structure (Str_conf) de confiance comprenant un identifiant (ID_Ter1) de confiance du terminal client et au moins un identifiant (ID_St1, ID_St2, ID_STN) d'une station (ST_Ref) de confiance étant un agent communicant appartenant au réseau et ayant déjà été en liaison avec le terminal client, l'identifiant de confiance propre au terminal client étant associé à au moins un indice (Ind1, Ind2, IndN) de confiance relatif à la station de confiance,
la requête générée par le terminal, à l'aide de la structure (Str_conf) de confiance, comprend au moins l'identifiant (ID_Ter1) de confiance du terminal client, l'identifiant (ID_St1) de la station de confiance et l'indice de confiance (Ind1) associé,
le procédé comprenant au moins :
- une étape (Etp05) de réception de la requête par le serveur,
- une étape de référence à la station de confiance, par son identifiant, comprenant une interprétation par pondération de l'indice de confiance, selon le type de l'indice de confiance,
- une étape (Etp12) d'évaluation de l'indice de confiance fourni par le terminal client, selon un critère de confiance,
- une étape (Etp14) de traitement de la requête, en cas d'indice de confiance évalué conforme au critère de confiance, selon un premier niveau de sécurité ou
- une étape (Etp15) de traitement de la requête, en cas d'indice de confiance évalué non conforme au critère de confiance, selon un second niveau de sécurité renforcé par rapport au premier niveau de sécurité.

2. Procédé selon la revendication 1, **caractérisé en ce que** l'étape d'envoi de la requête est précédée de :
- une étape d'activation de la structure de confiance,
- une étape (Etp01) de génération de la requête comprenant un message interprétable par le serveur auquel est ajouté l'identifiant de confiance du terminal client, l'identifiant de la station de confiance et l'indice de confiance associé,
- une ou plusieurs étapes de routage suivant l'étape d'envoi et précédant l'étape de réception par le serveur, un parcours de la requête, comprenant des références de routeurs et de noeuds intermédiaires, étant associé à la requête transmise au serveur.

3. Procédé selon la revendication 2, **caractérisé en ce que** chaque routeur ou noeud intermédiaire réalise, à la réception de la requête :
- une étape (Etp03) d'ajout à la requête d'un indice de confiance associé à une référence de station de confiance correspondant au routeur ou au noeud intermédiaire recevant la requête, l'indice de confiance associé correspondant au parcours de la requête, depuis le terminal client, via des noeuds ou des routeurs intermédiaires, jusqu'au routeur final recevant la requête,
- une étape (Etp04) de transmission de la requête, vers le serveur, par un chemin de routage.

4. Procédé selon la revendication 3, **caractérisé en ce que** durant l'étape de référence à la station de confiance, l'interprétation de l'indice de confiance, de type parcours de la requête, comprend une extraction (Etp06) des types de routeurs et de leur type de réseau associé ou des types de réseaux associés pour un noeud de type passerelle,
l'étape d'évaluation de l'indice de confiance, correspondant au parcours de la requête, comprenant une comparaison (Etp07) de chaque type de réseau d'un ensemble de réseaux parcourus par la requête avec une liste de types de réseaux de confiance, le parcours étant conforme au critère de confiance si chacun des types de réseaux parcourus appartient à la liste des types de réseaux de confiance.

5. Procédé selon l'une des revendications 1 à 4, **caractérisé en ce que** l'étape de référence à la station de confiance comprend :
- une étape (Etp08) d'envoi, à la station de confiance, d'une requête de confirmation de confiance, comprenant au moins l'identifiant de confiance du terminal client,
- une étape (Etp10) de réception de données de confiance, fournies par la station de confiance, relatives à l'identifiant de confiance du terminal client.

6. Procédé selon la revendication 5, **caractérisé en ce que** les données de confiance reçues sont représentatives d'un indice (Ind01) de confiance mis à jour et provenant d'une base (BD1) de données de la station de confiance comprenant l'identifiant (ID_Ter1) de confiance du terminal client associé à cet indice (Ind01) de confiance mis à jour,
l'indice (Ind01) de confiance fourni par la station de confiance étant comparé à l'indice (Ind1) de confiance fourni par le terminal client et associé à l'identifiant de cette station, durant l'étape d'évaluation,
l'indice (Ind1) de confiance fourni par le client étant conforme au critère de confiance lorsque l'indice de confiance fourni par le client est supérieur ou égal à l'indice (Ind01) de confiance fourni par la station de confiance référencée,
l'indice (Ind1) de confiance fourni par le client n'étant pas conforme au critère de confiance lorsque l'indice de confiance fourni par le client est inférieur à l'indice (Ind01) de confiance fourni par la station de confiance référencée.

7. Procédé selon la revendication 6, **caractérisé en ce que** l'indice (Ind01) de confiance, mémorisé par la station de confiance référencé, est réglé de façon croissante suivant un nombre d'opérations précédemment réussies, par rapport à un nombre total d'opérations, entre la station de confiance référencée et le terminal client, ces opérations étant du type :
- opération d'authentification mutuelle, ou
- opération d'authentification du terminal client par identifiant de connexion et mot de passe, ou
- opération de paiement par le terminal client,
- opération de service réussie entre un client et un serveur,
- opération de réponse, par le client, aux demandes d'accusé réception envoyées par la station de confiance référencée,
- opération de justification d'identité de l'utilisateur du terminal client.

8. Procédé selon la revendication 5, **caractérisé en ce que** la requête générée par le terminal, à l'aide de la structure de confiance, peut être protégée par une clé et associée à une signature d'indice, les données de confiance reçues fournies par la station de confiance comprenant une clé et une signature d'indice, l'étape d'évaluation de l'indice de confiance comprenant
- une étape de détermination, à l'aide de la clé fournie par la station de confiance, de la signature de l'indice de confiance fourni par le terminal client,
- une comparaison entre la signature fournie par la station de confiance référencée et la signature déterminée de l'indice de confiance fourni par la station de confiance référencée,
l'indice (Ind1) de confiance fourni par le client étant conforme au critère de confiance lorsque la signature déterminée correspond à la signature fournie par la station de confiance référencée,
l'indice (Ind1) de confiance fourni par le client n'étant pas conforme au critère de confiance lorsque la signature déterminée ne correspond pas à la signature fournie par la station de confiance référencée.

9. Procédé selon l'une des revendications 1 à 8, **caractérisé en ce qu'**après le traitement de la requête, réalisée avec succès par le serveur, le procédé comprend une étape (Etp18) de mémorisation dans une base de données du serveur, de données représentatives de l'identifiant de confiance du terminal client, associé à un premier indice de confiance archivé déterminé selon le niveau de sécurité du traitement réalisé.

10. Procédé selon l'une des revendications 1 à 9, **caractérisé en ce qu'**après le traitement de la requête, réalisée avec succès par le serveur, le procédé comprend une étape (Etp20) d'envoi, par le serveur, au terminal client, de données de fin de traitement représentatives d'un identifiant du serveur associé à un second indice de confiance archivé déterminé selon le niveau de sécurité du traitement réalisé avec succès.

11. Procédé selon la revendication 10, **caractérisé en ce qu'**il est suivi de :
- une étape de réception, par le terminal (TCL) client, des données de fin de traitement,
- une étape d'extraction et de mémorisation de données représentatives de la requête ou de son traitement, associées à l'identifiant du serveur et au second indice de confiance représentatif du niveau de sécurité du traitement réalisé avec succès.

12. Procédé selon l'une des revendications 1 à 8, **caractérisé en ce qu'**après un échec du traitement, selon son niveau de sécurité, le procédé comprend une (Etp16) étape de mémorisation dans une base de données du serveur, de données représentatives de l'identifiant de confiance du terminal client associées à des données représentatives d'un troisième indice de confiance archivé déterminé selon le niveau de sécurité du traitement ayant échoué.

13. Procédé selon l'une des revendications 1 à 12, **caractérisé en ce que** la requête du terminal comprenant une pluralité d'indices (Ind1, Ind2, IndN) de confiance et d'identifiants (ID_St1, ID_St2, ID_STN) de station de confiance associés, le procédé comprend une pluralité d'étapes de référence à chaque station de confiance et une pluralité d'étapes d'évaluation de chaque indice de confiance, suivies d'une étape de moyennage ou de corrélation par un ensemble de valeurs pondérées pour déterminer une conformité de la pluralité d'indices de confiance, graduellement par rapport au critère de conformité, la procédure de sécurité ayant une pluralité de niveaux de sécurité positionnés graduellement entre un niveau de sécurité maximum et un niveau de sécurité minimum.

14. Terminal client de communication comprenant un composant de traitement, un composant de mémorisation, un module d'interface de communication avec un réseau de télécommunication et un module de génération d'une requête vers un serveur, **caractérisé en ce qu'**il mémorise une structure (Str_conf) de confiance comprenant un identifiant (ID_Ter1) de confiance du terminal client et au moins un identifiant (ID_St1, ID_St2, ID_STN) d'une station (ST_Ref) de confiance étant un agent communicant relié au réseau de communication et ayant déjà été en liaison avec le terminal client, chaque identifiant de station de confiance étant associé à un indice (Ind1, Ind2, IndN) de confiance propre au terminal client, le terminal client comprenant au moins un module d'association de la requête à des données de confiance comprenant l'identifiant (ID_Ter1) de confiance du terminal client, l'identifiant (ID_St1) de la station de confiance et l'indice de confiance (Ind1) associé.

15. Terminal client selon la revendication 14, **caractérisé en ce que** la structure de confiance comprend de plus, associées à chaque indice de confiance :
- une valeur décimale représentative d'une confiance accordée par la station de confiance au terminal client,
- une valeur temporelle représentative d'une date de création de l'indice de confiance,
- une durée de vie de l'indice de confiance.

16. Terminal client selon la revendication 14 ou 15, **caractérisé en ce que** la structure de confiance comprend de plus un identifiant d'un serveur d'une base de données comme dépositaire d'indices de confiance.

17. Terminal client selon l'une des revendications 14 à 16, **caractérisé en ce qu'**il comprend un programme interactif d'activation, par l'utilisateur, du module d'association de la requête à des données de confiance, correspondant à l'activation d'un protocole de confiance s'appuyant sur un protocole au niveau applicatif.

18. Terminal client selon l'une des revendications 14 à 17, **caractérisé en qu'**il comprend un module de capitalisation de confiance réalisant une extraction et une mémorisation, dans la structure de confiance, de données représentatives d'un traitement, par le serveur, de la requête envoyée, fournies par le serveur, ces données représentatives du traitement comprenant un identifiant du serveur et un second indice de confiance représentatif d'un niveau de sécurité du traitement réalisé avec succès.

19. Plateforme de serveur pour au moins un terminal (TCL) client accédant à un programme serveur, la plateforme de serveur étant reliée à un ou plusieurs réseaux de communication, **caractérisé en ce qu'**elle comprend :
- un module de réception de la requête réalisant une extraction d'un identifiant d'une station de confiance étant un agent communicant, ledit identifiant étant fourni par le terminal client,
- un module de référence à la station de confiance, par son identifiant, et mettant en oeuvre une interprétation par pondération de l'indice de confiance, selon le type de l'indice de confiance,
- un module d'évaluation de l'indice de confiance, en fonction de l'interprétation, selon un critère de confiance,
- un module de traitement de la requête, selon au moins un premier ou respectivement un second niveau de sécurité distincts, en cas d'indice de confiance évalué conforme, ou respectivement non conforme, au critère de sécurité.

20. Plateforme de serveur selon la revendication 19, **caractérisée en ce qu'**elle comprend une base de données d'archivage d'identifiants de confiance de terminaux associés chacun à un indice de confiance correspondant au succès ou à l'échec d'une vérification selon un niveau de sécurité déterminé, en relation avec le terminal dont l'identifiant est archivé, la base de données étant consultable par d'autres terminaux ou d'autres programmes serveurs.

21. Plateforme de serveur selon la revendication 19 ou 20, **caractérise en ce que** le module de réception de la requête réalisant une extraction de l'identifiant de la station de confiance, le module de référence à la station de confiance, le module d'évaluation de l'indice de confiance et le module de traitement de la requête, selon au moins le premier ou le second niveau de sécurité distincts, forment un ensemble de gestion d'un protocole de confiance s'appuyant sur un protocole au niveau applicatif.

22. Système de communication comprenant au moins une plateforme de serveur selon la revendication 21 et un terminal selon la revendication 17 ou 18, **caractérisé en ce que** l'activation du protocole de confiance par l'utilisateur du terminal entraîne automatiquement l'activation de la gestion du protocole de confiance dans la plateforme de serveur, à la réception de la requête conforme au protocole de confiance.

23. Système de communication selon la revendication 22, **caractérisé en ce qu'**il comprend un serveur d'identifiants de confiance fournissant leur identifiant de confiance au serveur ou au terminal client.

24. Système de communication selon la revendication 22 ou 23, **caractérisé en ce qu'**il comprend des noeuds de communication intermédiaires de transmission de messages entre le terminal client et la plateforme de serveur, ces noeuds pondérant ou majorant les indices de confiance des messages transmis.

25. Système de communication selon l'une des revendications 22 à 24, **caractérisé en ce qu'**après l'activation du protocole de confiance par le terminal client, un serveur central de gestion de confiance réalise un archivage dans une base de données, d'un nouvel indice de confiance attribué par la plateforme de serveur, ou respectivement par le terminal client, au terminal client, ou respectivement à la plateforme de serveur.

26. Système de communication selon la revendication 25, **caractérisé en ce que** l'indice de confiance, mémorisé dans la base de données du serveur central, est associé à :
- un identifiant du terminal client, ou respectivement de la plateforme de serveur, comme détenteur de l'indice de confiance,
- un identifiant de la plateforme serveur, ou respectivement du terminal client, comme producteur d'indice,
- une valeur décimale représentative d'une confiance accordée par le producteur au détenteur,
- une valeur temporelle représentative d'une date de création de l'indice,
- une durée de vie de l'indice.
